**Europäisches Patentamt**

**European Patent Office**

**Office européen des brevets**

(19)

(11) Numéro de publication: **0 064 459**
**B1**

# (12) FASCICULE DE BREVET EUROPEEN

(45) Date de publication du fascicule du brevet:
**17.09.86**

(51) Int. Cl.⁴: **B 01 J 8/12,** C 10 G 49/14

(21) Numéro de dépôt: **82400762.9**

(22) Date de dépôt: **28.04.82**

(54) **Procédé et dispositif pour soutirer des particules solides et introduire une charge liquide à la partie inférieure d'une zone de contact.**

(30) Priorité: **29.04.81 FR 8108761**

(43) Date de publication de la demande:
**10.11.82 Bulletin 82/45**

(45) Mention de la délivrance du brevet:
**17.09.86 Bulletin 86/38**

(84) Etats contractants désignés:
**BE DE GB IT NL**

(56) Documents cités:
**FR - A - 1 528 650**
**FR - A - 2 121 676**
**FR - A - 2 173 040**
**NL - C - 79 876**
**US - A - 2 432 962**
**US - A - 2 664 347**
**US - A - 2 846 369**
**US - A - 3 652 231**
**US - A - 3 958 585**

(73) Titulaire: **INSTITUT FRANCAIS DU PETROLE, 4, Avenue de Bois-Préau, F-92502 Ruell-Malmaison (FR)**

(72) Inventeur: **Euzen, Jean-Paul, 45, Chemin Bachely, F-69570 Dardilly (FR)**
Inventeur: **Van Landeghem, Hugo, décédé (FR)**
Inventeur: **Jacquin, Yves, 36, rue des Fontaines, F-92310 Sèvres (FR)**

## Description

La présente invention concerne un procédé et des dispositifs de traitement catalytique d'une charge fluide et plus particulièrement de conversion ou d'hydroconversion d'hydrocarbures.

L'invention est notamment applicable aux traitements catalytiques de charges liquides, telles que, par exemple, des bruts pétroliers lourds, des résidus de la distillation d'hydrocarbures sous vide, ces traitements étant effectués généralement en présence d'hydrogène et/ou de mélanges gazeux riches en hydrogène, sur un lit de catalyseur solide, le catalyseur étant utilisé sous forme de particules (catalyseur extrudé, grains de formes diverses, billes etc...).

Lors de tels traitements catalytiques, on constate une désactivation souvent rapide du catalyseur, due à la présence de poisons catalytiques, à la formation de coke, au dépôt de certains métaux... etc...

Cette désactivation nécessite le remplacement fréquent de tout ou partie du lit catalytique.

Conformément à l'invention, le soutirage du catalyseur hors du réacteur est effectué progressivement. Le terme «progressivement» signifie que le catalyseur peut être soutiré:

– soit périodiquement, par exemple avec une fréquence de 1/10 à 10 jours, en ne soutirant à la fois qu'une fraction, par exemple 0,5 à 15% de la quantité totale de catalyseur. On peut, selon les besoins, soutirer davantage de catalyseur et par exemple soutirer jusqu'à 100% de la quantité totale de catalyseur, c'est-à-dire la totalité du catalyseur. La fréquence de soutirage du catalyseur peut être beaucoup plus rapide, (de l'ordre de la minute ou de la seconde par exemple), la quantité soutirée étant réduite en proportion; entre les périodes de soutirage, le réacteur fonctionne donc en lit fixe.

– soit en continu; dans ce cas, le réacteur est du type à lit mobile. Le catalyseur frais est introduit à la partie supérieure du réacteur et le procédé et les dispositifs pour réaliser l'évacuation de catalyseur usé à la partie inférieure du réacteur à travers un entonnoir de soutirage, font l'objet de la présente invention.

Le procédé selon l'invention et les dispositifs selon l'invention conviennent également pour le soutirage de particules catalytiques de réacteurs de crackage, d'hydrocraquage, d'hydroréformage, de fabrication d'hydrocarbures aromatiques, d'isomérisation d'hydrocarbures paraffiniques, naphthéniques ou aromatiques, les réactions diverses d'hydrogénation, de déshydrogénation, d'alkylation, de transalkylation, d'hydrodécyclisation, d'hydrodéalkylation etc... réacteurs où la charge et/ou les gaz qui y sont injectés, cheminent de bas en haut. Le dispositif et le procédé selon l'invention conviennent encore pour toutes enceintes où sont manipulés des liquides et/ou des gaz ainsi que des particules solides en grains, quelles que soient leurs tailles, à condition qu'elles puissent descendre sous l'effet de la pesanteur ou d'une fuite de gaz contrôlée entraînant ces particules. On pourrait ainsi citer, à titre non limitatif, les graviers, les sables, les dragées, les grains, les granulés, les comprimés, les pastilles de toutes sortes utilisées en pharmacie, en confiserie, en alimentation, etc...

De préférence, la charge fluide est introduite dans le réacteur ou l'enceinte renfermant des particules par des organes de distribution situés à la partie inférieure du réacteur ou de l'enceinte et circule à contre-courant du catalyseur ou des particules avant d'être évacuée, après traitement, à la partie supérieure du réacteur (ou de l'enceinte que l'on désigne arbitrairement «réacteur» dans la suite de la présente description).

L'écoulement du catalyseur, ou des particules, par gravité, assure une descente régulière du lit catalytique ou du lit de particules (particules que l'on désigne arbitrairement «catalyseur» dans la suite de la description), tandis que la circulation ascendante de la charge fluide permet en particulier un réglage facile du temps de séjour et assure une phase fluide continue.

Par ailleurs la circulation à contre-courant de la charge et du catalyseur permet d'obtenir une conversion catalytique poussée puisque le catalyseur frais introduit au sommet du réacteur traite une charge presque convertie (c'est-à-dire contenant essentiellement des composés dont la transformation est difficile), tandis qu'au fond du réacteur le catalyseur usé traite une charge fraîche (c'est-à-dire riche en composés faciles à transformer), ce qui réalise efficacement les premières étapes de la conversion. Il en résulte une utilisation systématique du catalyseur dans le réacteur, un profil thermique du lit catalytique plus régulier que dans une circulation du type co-courant, avec, en particulier, au bas du réacteur, une température plus modérée réduisant les risques de cokéfaction du catalyseur.

On connaît par le brevet US 3 826 737 un procédé de conversion catalytique en lit mobile. Ce procédé est cependant plus particulièrement adapté à la circulation co-courant du catalyseur et de la charge liquide, cette dernière étant évacuée à la base du réacteur à travers une grille cylindrique disposée à la base du cône de décharge du catalyseur.

Un tel procédé présente l'inconvénient d'un risque d'encrassement de la grille par des grains de catalyseur poussés contre cette grille par la charge liquide évacuée par le fond du réacteur. Il peut alors en résulter une répartition irrégulière des fluides dans le catalyseur, des difficultés d'écoulement du lit catalytique, avec des risques de blocage de certaines zones de ce lit, ainsi qu'un accroissement de l'érosion du catalyseur dû au frottement entre grains bloqués et grains libres du lit catalytique et entre les grains de catalyseur libres et la grille d'évacuation de la charge liquide.

Un autre procédé est décrit dans le brevet néerlandais No 79 876 décrivant la montée d'une charge liquide à travers les perforations d'une grille.

2

L'objet de l'invention est de fournir une technique qui supprime les inconvénients mentionnés ci-dessus.

Ce résultat est obtenu par un procédé pour soutirer des particules solides en grains d'un espace généralement fermé et pour introduire dans le dit espace une charge fluide constituée au moins d'un liquide, le dit espace généralement fermé ayant sensiblement la forme d'un volume de révolution allongé et sensiblement vertical, les particules solides étant introduites à la partie supérieure de l'enceinte et soutirées progressivement dans la partie inférieure de l'enceinte après avoir cheminé de haut en bas dans la dite enceinte, tandis que la charge fluide est introduite au moins en partie dans la partie inférieure de la dite enceinte et en est soutirée dans la partie supérieure après avoir cheminé de bas en haut dans la dite enceinte, procédé dans lequel les particules solides sont soutirées par l'extrémité inférieure d'au moins une zone évasée ayant la forme d'un cône renversé ou d'une pyramide renversée, c'est-à-dire d'un cône ou d'une pyramide dont le sommet est tourné vers le bas, sommet dans lequel est percé une ouverture de taille convenable pour l'évacuation des particules solides, les parois de la dite zone évasée étant sensiblement et régulièrement discontinues c'est-à-dire étant parsemées d'au moins plusieurs ouvertures régulièrement espacées ayant chacune une taille suffisamment petite pour empêcher les particules solides de passer au travers des dites parois mais suffisamment grande pour permettre le passage éventuel à travers ces ouvertures d'un courant ascendant d'une partie au moins de la charge fluide, le procédé étant caractérisé en ce qu'une partie au moins de la charge fluide est injectée dans la partie inférieure de la dite enceinte par au moins deux orifices situés soit au dessus des dites parois, soit en dessous des dites parois, soit l'un ou les uns au dessus et l'autre ou les autres orifices en dessous des dites parois, chaque orifice étant situé à une distance des dites parois au moins égale à la taille moyenne d'une particule solide et au plus égale à environ 500 fois la taille moyenne d'une particule solide, distance, de préférence comprise entre 4 et 50 fois la taille moyenne d'une particule solide de catalyseur et généralement inférieure à 10 cm, par exemple de l'ordre de 5 cm, le procédé étant en outre caractérisé par la manière dont est introduite une partie au moins de la phase liquide, comme expliqué plus loin.

L'invention est illustrée par diverses figures:

Les figures 1, 1A et 1B montrent, en coupe axiale et en section droite respectivement, un dispositif selon l'invention, avec un seul entonnoir de soutirage du catalyseur.

Les figures 2 et 2A représentent un autre mode de réalisation, en coupe axiale et en section droite respectivement, avec plusieurs entonnoirs de soutirage du catalyseur.

Les figures 3 à 6 illustrent différents modes de réalisation des moyens d'introduction de la charge fluide.

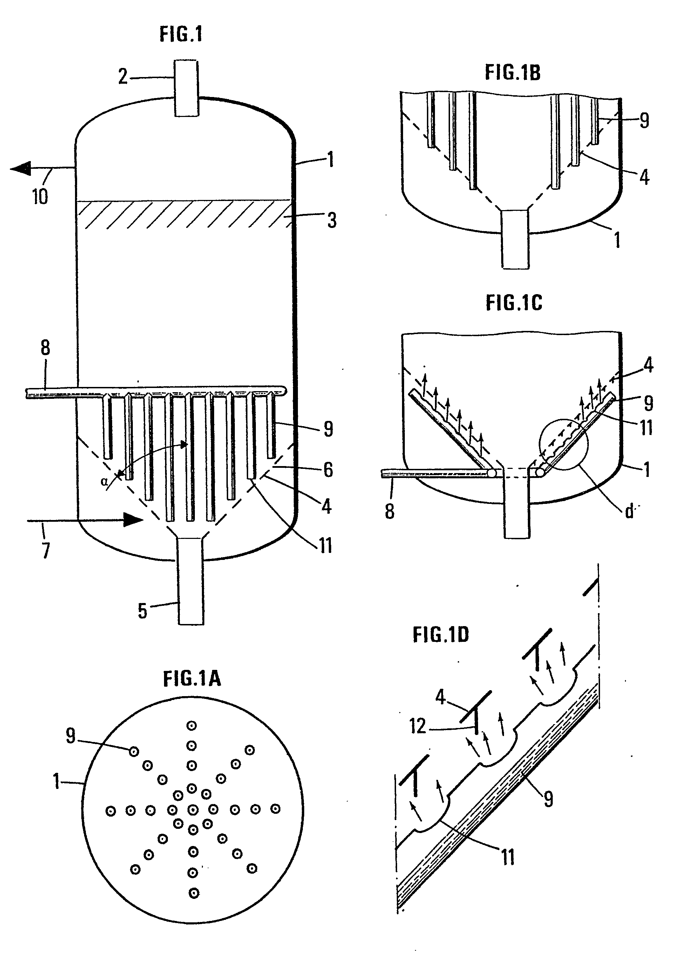

Les figures 1, 1A et 1B représentent schématiquement un premier mode de réalisation d'un dispositif de traitement catalytique, par exemple en lit mobile.

Le réacteur 1, qui peut être de type radial ou axial, comporte à sa partie supérieure des moyens d'introduction de catalyseur frais (neuf ou régénéré) schématisés par le conduit 2 qui déverse les particules de catalyseur pour alimenter un lit de catalyseur 3.

Le catalyseur s'écoule par gravité dans le réacteur et est évacué, par le conduit 5, à la partie inférieure du réacteur 1, par l'intermédiaire d'un entonnoir de soutirage 4 qui sur la figure se présente sous l'aspect d'une grille. Cet entonnoir, ici en forme de cône renversé, est donc muni d'ouvertures telles que 6, formées par les espaces ajourés de la grille 4 qui laissent passer au moins la partie de la charge liquide et/ou gazeuse éventuellement injectée en dessous du niveau des grilles par une conduite telle que 7, mais ne laissent pas passer les particules de catalyseur.

L'angle α que fait l'axe du cône (ou l'axe de la pyramide si l'entonnoir a cette forme) avec l'une des génératrices du cône (ou l'une des arêtes de la pyramide) est compris entre 10 et 80°, de préférence entre 30 et 40°. Au moins une partie de la charge fluide est introduite à la partie inférieure du réacteur 1 par des moyens comprenant au moins une rampe de distribution 8 qui alimente une pluralité de cannes verticales d'injection 9.

Cette charge fluide qui peut être formée d'une ou de deux phases (liquide ou/et gaz) remonte dans le réacteur à contre-courant du catalyseur avant d'être évacuée à la partie supérieure du réacteur par l'intermédiaire de moyens de collecte et d'évacuation schématisés par la conduite 10 ayant la forme par exemple d'un rateau constitué de tubes collecteurs raccordés à un conduit d'évacuation.

Les cannes (ou jambes) d'injection 9, du type de celles qui sont décrites dans USP 2 432 962, sont régulièrement réparties à l'intérieur de l'entonnoir 4 avec un écartement suffisant pour que les particules de catalyseur ne se coincent pas ou ne soient pas ralenties ou freinées entre ces cannes.

Ces conduits 9 ont des longueurs différentes et débouchent à la base du lit catalytique par des orifices 11 régulièrement répartis et situés à peu de distance des parois de l'entonnoir comme indiqué précédemment.

Sur la figure 1A, on distingue en coupe, la section du réacteur 1 et la section des cannes 9, débouchant au voisinage des parois de l'entonnoir.

La figure 1B est une variante de la figure 1: les cannes verticales 9 de la figure 1, (ici cannes 9) débouchent sous la grille 4 disposée au fond du réacteur 1.

Mais une variante préférée de la figure 1B consisterait, selon la figure 1C, à introduire la charge liquide sous la grille 4 par au moins une rampe 8 qui alimente une pluralité de tubes d'injection 9 munis de perforations telles que 11 sur la partie gauche de la figure 1C. La partie droite de la figure 1C représente une variante dans laquelle la grille 4 est munie de barrières verticales découpant des compartiments ouverts comme représenté sur la figure 1D qui permettent d'éviter la migration du gaz vers le haut de la zone de distribution et améliore ainsi la répartition du gaz et du liquide sur la section du lit. La figure 1D représente les dites barrières verticales 12 disposées au dessus d'un tube 9 muni de ses perforations 11. Le nombre des barrières 12 est indépendant du nombre des perforations 11.

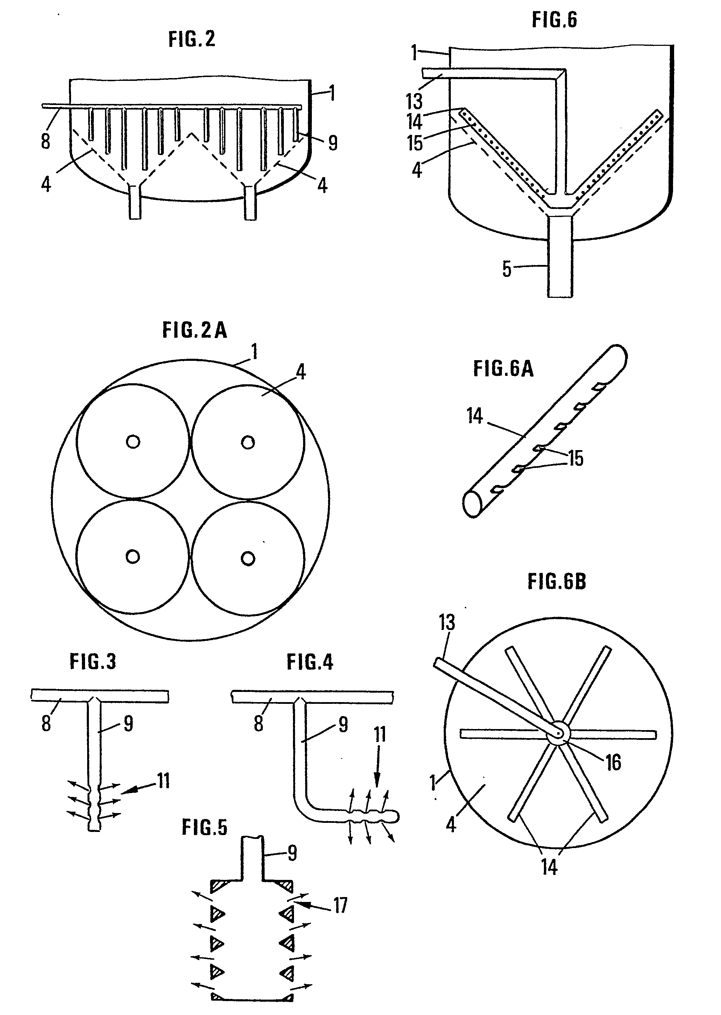

Les figures 2 et 2A illustrent schématiquement un mode de réalisation dans lequel l'évacuation du catalyseur s'effectue par plusieurs entonnoirs de soutirage. On a représenté, sur ces figures 2 et 2A, uniquement le fond d'un réacteur 1 et les entonnoirs tels que 4 et sur la figure 2, les cannes 9 et la rampe 8. La figure en coupe 2A montre ainsi 4 entonnoirs, deux d'entre eux seulement étant visibles sur la figure 2 en coupe axiale. Lorsqu'il y a plusieurs entonnoirs, il est également possible de disposer les tubes d'injections et/ou les rampes 8 comme cela a été montré sur les figures 1B, 1C et 1D.

Le nombre des entonnoirs de soutirage 4 dépend de la géométrie du réacteur, des contraintes mécaniques de construction et de l'uniformité des trajets souhaitée pour les particules catalytiques qui traversent les divers secteurs du réacteur.

Un tel mode de soutirage permet de régler facilement le débit de catalyseur, indépendamment de celui de la charge fluide et permet de réaliser à volonté un soutirage continu (lit mobile) ou discontinu du catalyseur (lit fixe).

Pour ce qui concerne les figures 1 et 2, les cannes de distribution de la charge fluide sont disposées verticalement et régulièrement réparties sur toute la section du réacteur et vont jusqu'à proximité de la paroi du ou des entonnoirs de soutirage du catalyseur.

Lorsque la charge fluide comprend plusieurs phases, celles-ci pourront être admises, soit séparément, soit mélangées dans les proportions souhaitées pour la conversion en phase mixte gaz-liquide.

Dans les figures 1 et 2, (et d'une façon générale), il est parfois préférable par exemple, d'injecter la phase gazeuse, en majeure partie, par la dite rampe et les dites cannes et d'injecter la phase liquide, en majeure partie, sous les parois du ou des entonnoirs par exemple, par la conduite 7 sur la figure 1.

Les cannes de distribution comportent donc à leur partie inférieure un organe d'injection d'une partie au moins de la charge fluide sur lequel est disposé au moins un dit orifice: ces organes peuvent être de différents types:

Sur la figure 3, on a représenté une rampe 8 et une canne 9 dont, ici l'organe d'injection est constitué d'un embout 11 perforé disposé verticalement; les petites flèches indiquent le trajet du fluide au moment de son injection par les dits orifices de l'embout.

Sur la figure 4, on a représenté une rampe 8 et une canne 9 dont ici l'organe d'injection est constitué d'un embout 11 perforé disposé horizontalement; les petites flèches indiquent le trajet du fluide au moment de son injection par les dits orifices de l'embout.

On peut utiliser également, dans le réacteur, à la fois des cannes à embouts horizontaux ou verticaux ou disposés selon toute autre orientation.

Selon un autre mode de réalisation (Fig. 5), les organes d'injection de la charge fluide pourront être formés par des petites buses 17, cylindriques ou crépines 2, de diamètre supérieur à celui des cannes de distribution 9, ces buses étant disposées verticalement et ayant des fentes horizontales pour l'admission de la charge fluide.

Ces organes d'admission de la charge fluide seront tous disposés à faible distance au-dessus de la paroi du ou des entonnoirs de soutirage comme indiqué précédemment.

L'agencement selon l'invention permet d'assurer une circulation homogène du lit catalytique et de la charge fluide dans le réacteur sans freinage de l'écoulement du catalyseur par les organes de distribution, ni par la paroi du ou des entonnoirs de soutirage.

Eventuellement, il sera possible d'effectuer une injection secondaire de fluide à la base du ou des entonnoirs de soutirage afin d'empêcher le tassement du catalyseur à la partie inférieure du lit catalytique, et de supprimer totalement les risques de cokéfaction du catalyseur.

Le fluide faisant l'objet de cette injection secondaire pourra être de l'hydrogène ou une faible fraction (de l'ordre de 1%, par exemple) de la charge convertie sortant à la partie supérieure du réacteur, éventuellement après refroidissement.

La figure 6 représente un autre dispositif d'injection, dans un réacteur 1, d'une partie au moins d'une charge fluide constituée d'au moins une phase liquide et/ou gazeuse. La charge est au moins en partie introduite par la tubulure 13 qui pénètre sensiblement horizontalement à l'intérieur du réacteur puis suit un trajet sensiblement confondu avec l'axe de l'entonnoir (un seul entonnoir 4 est dessiné sur la figure 6), jusqu'au voisinage du fond de l'entonnoir et de l'orifice 5 de soutirage du catalyseur, la dite tubulure se divisant en un faisceau de tubes ou de branches 14 qui remontent le long des parois de l'entonnoir, sensiblement parallèlement à ces parois, ces tubes étant, par exemple, percés d'orifices 15 pour l'injection de la charge. Le dispositif est ainsi constitué de plusieurs tubes 14 qui peuvent être, par exemple, perforés comme l'indique la figure 6 (avec les perforations de préférence orientées vers le bas) ou, par exemple encore, munis de fentes circulaires ou semi-circulaires, orientées vers le bas, comme l'indique la figure 6a (tube 14 et orifices 15 en forme de fentes).

La figure 6b montre le dispositif vu en coupe, par au dessus: on distingue le réacteur 1, et les branches telles que 14, ascendantes et parallèles à certaines génératrices de l'entonnoir 4 disposées comme les baleines d'un parapluie renversé. Ces tubes, réunis ensemble au niveau de leur partie inférieure 16, sont alimentés par la uterie ou tubulure 13, d'abord horizontale qu'elle pénètre dans le réacteur, puis sensiment verticale et au centre par rapport aux iches et généralement confondue avec l'axe 'entonnoir 4 (ou de chaque entonnoir s'il y en usieurs).

hacun des tubes d'injection (14 sur les figures 6b) est proche de la génératrice correspone du cône de l'entonnoir, en laissant pourtant e le cône et le tube 14 un espace suffisant pour mettre le libre passage des grains de cataly-r lorsqu'ils descendent le long de l'entonnoir. es sections des différents tubes 14 d'injection telles que la séparation éventuelle des phaqui constituent la charge fluide est rendue ossible par les phénomènes de turbulence.

es perforations ou les fentes de ces tubes jection, ainsi qu'indiqué précédemment, sont ntées préférentiellement vers le bas de mae à éviter leur bouchage par des fragments de llyseur, et aussi de manière à irriguer le lit llytique de manière systématique, et en partiar jusqu'à proximité de l'entonnoir le long dul glisse le catalyseur.

**endications**

Procédé pour soutirer des particules de cataur d'une zone de réaction et pour introduire s ladite zone une charge fluide constituée d'auns un liquide et d'un gaz riche en hydrogène, te zone ayant sensiblement une forme cylinue allongée et sensiblement verticale, les parles de catalyseur étant introduites à la partie érieure de la zone de réaction et soutirées gressivement dans la partie inférieure de la e de réaction après avoir cheminé de haut en dans ladite zone de réaction, tandis que la rge fluide est introduite au moins en partie s la partie inférieure de ladite zone de réaction n est soutirée dans la partie supérieure après ir cheminé de bas en haut dans la zone de ction, procédé dans lequel en outre les particu- de catalyseur sont soutirées par l'extrémité rieure d'au moins une zone évasée ayant la ne d'un cône renversé ou d'une pyramide rensée, c'est-à-dire d'un cône ou d'une pyramide t le sommet est tourné vers le bas, l'angle ren que fait l'axe du cône ou de la pyramide c l'une des génératrices du cône ou l'une des tes de la pyramide étant compris entre 10 et ledit sommet tourné vers le bas étant percé au moins une ouverture de taille nécessaire évacuation des particules de catalyseur, les ois de ladite zone évasé ou de chaque zone sée s'il en a plusieurs, étant sensiblement et ulièrement discontinues, c'est-à-dire étant semées d'au moins plusieurs ouvertures régu- ement espacées dont la taille est suffisamment te pour empêcher les particules de catalyseur passer au travers desdites parois mais suffi- iment grande pour permettre le passage éven- , à travers ces ouvertures, d'un courant ascen- t d'une partie au moins de la charge fluide, le cédé étant caractérisé en ce qu'une partie au moins de la charge fluide est injectée dans la partie inférieure de ladite zone de réaction par au moins deux orifices situés soit au-dessus desdites parois, soit en dessous desdites parois, soit l'un ou les uns au-dessus et l'autre ou les autres orifices en dessous desdites parois, chaque orifice étant situé à une distance desdites parois au moins égale à la taille moyenne d'une particule de catalyseur et au plus égale à environ 500 fois la taille moyenne d'une particule de catalyseur, la partie au moins de la charge fluide, qui est introduite dans la zone de réaction par lesdits orifices, étant introduite dans la zone de réaction par une conduite principale généralement sensiblement horizontale qui soit se subdivise en plusieurs conduites disposées sensiblement verticalement à l'intérieur de la zone de réaction et aux extrémités desquelles sont disposés lesdits orifices, soit se subdivise en une tubulure par enceinte évasée, ladite tubulure étant disposée sensiblement verticalement selon l'axe de chaque cône ou de chaque pyramide et se subdivisant au voisinage du sommet dudit cône ou de ladite pyramide en une pluralité de conduites sensiblement parallèles aux génératrices du cône ou aux parois de la pyramide et le long desquelles conduites sont disposés lesdits orifices.

2. Appareil pour effectuer le procédé selon la revendication 1 comportant (voir figures 1, 1b ou 1c ou 2 ou 6) un réacteur 1, des moyens 2 d'introduction de catalyseur frais à la partie supérieure du réacteur, des moyens d'évacuation du catalyseur usé à la partie inférieure de ce réacteur, ces moyens d'évacuation comportant au moins un entonnoir 4 de soutirage, de forme conique ou pyramidale, dont le sommet pointe vers le bas, sommet autour duquel est aménagée une ouverture 5 suffisamment grande pour évacuer le catalyseur usé hors du réacteur, des moyens 8 d'introduction de la charge fluide à la partie inférieure du réacteur et des moyens 10 d'évacuation de la charge fluide traitée à la partie supérieure du réacteur, comportant également en combinaison,

a) au moins ledit entonnoir 4 de soutirage dont la paroi est pourvue de perforations 6 sensiblement réparties sur toute la hauteur de cet entonnoir, la taille desdites perforations étant suffisamment petite pour empêcher le passage des particules de catalyseur à travers lesdites parois mais suffisamment grande pour permettre le passage éventuel à travers lesdites parois d'un courant ascendant d'une partie au moins de la charge fluide.

b) des orifices 11 aménagés sur des conduites 9 d'introduction d'une partie au moins de la charge fluide, lesdits orifices étant aménagés soit au-dessus, soit au-dessous, soit à la fois audessus et au-dessous desdites parois et à une distance desdites parois au moins égale à la taille moyenne d'une particule catalytique et au plus égale à environ 10 cm,

appareil dans lequel en outre, chaque entonnoir a la forme d'un cône ou d'une pyramide inversée, l'angle que fait l'axe du cône ou de la pyramide avec l'une des génératrices du cône ou l'une des arêtes de la pyramide étant compris entre 10 et 80°, l'appareil étant caractérisé en ce que

(a) soit les orifices sont situés au voisinage de l'extrémité inférieure d'une pluralité de conduits sensiblement verticaux, l'écartement entre les conduits, pris deux à deux, étant suffisant pour ne pas freiner les particules de catalyseur, la pluralité de conduits étant alimentée par au moins une tubulure qui pénètre sensiblement horizontalement à l'intérieur du réacteur.

(b) soit on utilise, pour introduire une partie de la charge, une tubulure par entonnoir, qui pénètre sensiblement horizontalement à l'intérieur du réacteur puis suit un trajet sensiblement confondu avec l'axe de l'entonnoir, jusque dans le fond de cet entonnoir, ladite tubulure éclatant ensuite en un faisceau de tubes ou de branches ascendantes sensiblement parallèles aux parois de l'entonnoir, ces tubes étant percés desdits orifices par lesquels est réalisée l'injection d'une partie de la charge, cesdits orifices se présentant sous la forme de perforations ou de fentes.

## Claims

1. A process for withdrawing catalyst particles from a reaction zone and for introducing into said zone a fluid charge consisting of at least one liquid and one gas of high hydrogen content, said zone having substantially an elongate and substantially vertical cylindrical shape, the catalyst particles being introduced at the upper part of said reaction zone and progressively withdrawn from the lower part of the reaction zone after having progressed downwardly through said reaction zone, whereas the fluid charge is introduced at least partly in the lower part of said reaction zone and is withdrawn from the upper part thereof after having progressed upwardly through said reaction zone, said process being characterized in that the catalyst particles are withdrawn from the lower end of a flared zone having the shape of an inverted cone or an inverted pyramid, i.e. a cone or a pyramid whose top is turned downwardly, the average angle between the axis of the cone or pyramid and one of the cone generatrices or one of the pyramid solid angles being from 10 to 80°, said top turned downwardly having at least one opening of the required size for discharging the catalyst particles, the walls of said flared zone being substantially and regularly discontinuous, i.e. dotted with at least several regularly spaced openings of a sufficiently small size to prevent the catalyst particles to pass through said walls but large enough to give eventually passage, through said openings, to an upward stream of at least a part of the fluid charge, said process being further characterized in that at least a portion of the fluid charge is injected in the lower part of said reaction zone through at least two orifices located either above said walls or below said walls or one or more above and the other orifice or orifices below said walls, each orifice being located at a distance from said walls at least equal to the average size of a catalyst particle and at most equal to about 500 times the average size of a catalyst particle, wherein at least the portion of the fluid charge which is introduced into the reaction zone through said orifices is introduced into the reaction zone through a main pipe generally substantially horizontal which either is subdivided into several pipes arranged substantially vertically inside the reaction zone and the end of which is provided with said orifices, or is subdivided into at least one tube per flared enclosure, said tube being substantially vertical along the axis of each cone or each pyramid and being subdivided at the vicinity of the top of said cone or of said pyramid into a plurality of ducts substantially parallel to the generatrices of the cone or to the walls of the pyramid and along which are provided said orifices.

2. An apparatus for carrying out the process according to claim 1, comprising (see figures 1, 1b, or 1c or 2 or 6) a reactor 1, means 2 for introducing fresh catalyst at the upper part of the reactor, means for discharging the used catalyst at the lower part of said reactor, said discharge means comprising at least one withdrawal funnel 4 of a conical or pyramidal shape, whose top is oriented downwardly, an opening 5 large enough to discharge the used catalyst outside the reactor being provided about said top, means 8 for introducing the fluid charge at the lower part of the reactor and means 10 for discharging the treated fluid charge from the upper part of the reactor, also comprising in combination:

a) at least said withdrawing funnel 4 whose wall is provided with perforations 6 substantially distributed over the whole height of said funnel, the size of said perforations being sufficiently small to prevent the passage of catalyst particles through said walls, but large enough to provide for the eventual passage through said walls of an upward stream of at least a portion of the fluid charge.

b) orifices 11 provided in tubes 9 for introducing at least a portion of the fluid charge, said orifices being located either above or below or both above and below said walls and at a distance from said walls at least equal to the average size of a catalyst particle and at most equal to about 10 cm, apparatus, wherein furthermore each funnel has the shape of an inverted cone or pyramid, the angle between the axis of the cone or of the pyramid with one of the generatrices of the cone or one of the solid angles of the pyramid being from 10 to 80°, the apparatus being characterized in that

(a) either the orifices are located at the vicinity of the lower end of a plurality of substantially vertical ducts, the spacing between the ducts taken by pairs being sufficient to avoid the braking of the catalyst particles, the plurality of ducts being fed with at least one pipe which penetrates substantially horizontally inside the reactor,

(b) or making use, for introducing a portion of the charge, of at least one tube which penetrates substantially horizontally inside the reactor and follows a path substantially along the axis of the funnel down to the bottom of said funnel, said pipe being then subdivided into a bundle of ascending branch pipes substantially parallel to the walls of the funnel, said tubes having openings wherethrough is injected a portion of the charge, said orifices having the shape of perforations or slots.

**Patentansprüche**

1. Verfahren zum Abziehen der Katalysatorpartikel aus einer Reaktionszone und zum Einführen einer Fluidcharge in diese Zone, die aus wenigstens einer Flüssigkeit und einem wasserstoffreichen Gas besteht, wobei die Zone im wesentlichen von zylindrischer länglicher und im wesentlichen vertikaler Gestalt ist, wobei die Katalysatorpartikel im oberen Teil der Reaktionszone eingeführt und allmählich im unteren Teil der Reaktionszone abgezogen werden, nachdem sie diese Reaktionszone von oben nach unten durchwandert haben, während die Fluidcharge wenigstens zum Teil im unteren Teil der Reaktionszone eingeführt wird und im oberen Teil abgezogen wird, nachdem sie die Reaktionszone von unten nach oben durchwandert hat, Verfahren, bei dem im übrigen die Katalysatorpartikel über das untere Ende wenigstens einer aufgeweiteten Zone in der Gestalt eines umgekehrten Konus oder einer umgekehrten Pyramide abgezogen werden, das heisst eines Konus oder einer Pyramide, deren Spitze nach unten weist, wobei der mittlere Winkel, den die Achse des Konus oder der Pyramide mit einer der Erzeugenden des Konus oder einer der Kanten der Pyramide bildet, zwischen 10 und 80° beträgt, wobei die nach unten weisende Spitze von wenigstens einer Öffnung einer Abmessung durchbohrt ist, die zur Entfernung der Katalysatorpartikel notwendig ist, wobei die Wandungen dieser aufgeweiteten Zone oder gegebenenfalls mehrerer aufgeweiteter Zonen im wesentlichen und regelmässig unterbrochen, das heisst besetzt sind mit wenigstens mehreren regelmässig unter Abstand vorgesehenen Öffnungen, deren Abmessung ausreichend klein ist, um die Katalysatorpartikel daran zu hindern, durch diese Wandungen zu treten, jedoch ausreichend gross ist um gegebenenfalls den Durchgang durch diese Öffnungen eines aufsteigenden Stroms wenigstens eines Teils der Fluidcharge zu ermöglichen, dadurch gekennzeichnet, dass wenigstens ein Teil der Fluidcharge in dem unteren Teil dieser Reaktionszone über wenigstens zwei Öffnungen eingeführt bzw. eingespritzt wird, die sich entweder oberhalb dieser Wandungen oder unterhalb dieser Wandungen oder die eine oder die einen oberhalb und die andere oder die anderen unterhalb dieser Wandungen befinden, wobei jede Öffnung unter einer Entfernung von diesen Wandungen angeordnet ist, die wenigstens gleich der mittleren Abmessung einer Katalysatorpartikel und höchstens gleich etwa dem 500fachen der mittleren Abmessung einer Katalysatorpartikel ist, wobei wenigstens der Teil der Fluidcharge, der in die Reaktionszone über diese Öffnungen eingeführt wird, in die Reaktionszone über eine Hauptleitung eingeführt wird, die im wesentlichen horizontal sich befindet und die entweder in mehrere Leitungen unterteilt ist, die im wesentlichen vertikal im Inneren der Reaktionszone angeordnet sind und an deren Enden diese Öffnungen angeordnet sind oder sich in einen Stutzen pro erweiterten Raum unterteilt und dieser Stutzen im wesentlichen vertikal entsprechend der Achse jedes Konus oder jeder Pyramide angeordnet ist und sich benachbart der Spitze dieses Konus oder dieser Pyramide in eine Vielzahl von Leitungen unterteilt, die im wesentlichen parallel zu den Erzeugenden des Konus oder der Wandungen der Pyramide sind und wobei längs dieser Leitungen diese Öffnungen angeordnet sind.

2. Vorrichtung zur Durchführung des Verfahrens nach Anspruch 1 mit (siehe Figuren 1, 1b oder 1c oder 2 oder 6) einem Reaktor 1, Einrichtungen 2 zum Einführen des frischen Katalysators im oberen Teil des Reaktors, Einrichtungen zum Abziehen des verbrauchten Katalysators im unteren Teil dieses Reaktors, wobei die Abzugseinrichtungen wenigstens einen Abzugstrichter 4, konischer oder pyramidenförmiger Gestalt aufweisen, deren Spitze nach unten weist, wobei um die Spitze eine ausreichend grosse Öffnung 5 vorgesehen ist, um den verbrauchten Katalysator aus diesem Reaktor zu entfernen, Einrichtungen 8 zum Einführen der Fluidcharge im unteren Teil dieses Reaktors sowie Einrichtungen 10 zum Abführen der behandelten Fluidcharge im oberen Teil des Reaktors, umfassend, ebenfalls in Kombination,

a) einen Abzugstrichter 4, dessen Wandung mit Perforationen 6 versehen ist, die im wesentlichen über die gesamte Höhe dieses Trichters verteilt sind, wobei die Abmessung dieser Perforationen ausreichend klein ist, um den Durchgang der Katalysatorpartikel durch diese Wandungen zu verhindern, jedoch ausreichend gross ist, um den eventuellen Durchgang durch diese Wandungen eines aufsteigenden Stromes wenigstens eines Teils der Fluidcharge zu ermöglichen.

b) Öffnungen 11, die an den Leitungen 9 zum Einführen wenigstens eines Teils der Fluidcharge vorgesehen sind, wobei diese Öffnungen entweder oberhalb oder unterhalb oder gleichzeitig unterhalb und oberhalb dieser Wandungen und unter einer Entfernung von diesen Wandungen vorgesehen sind, die wenigstens gleich der mittleren Abmessung einer katalytischen Partikel und wenigstens gleich und höchstens gleich etwa 10 cm sind, Vorrichtung, bei der darüberhinaus jeder Trichter die Form eines Konus oder Kegels oder einer umgekehrten Pyramide hat, wobei der Winkel, den die Achse des Konus oder der Pyramide mit einer der Erzeugenden des Konus oder einer der Kanten der Pyramide bildet, zwischen 10 und 80° liegt und die Vorrichtung sich dadurch auszeichnet, dass

(a) entweder die Öffnungen sind benachbart dem unteren Ende einer Vielzahl von im wesentlichen vertikalen Leitungen angeordnet, wobei der Abstand zwischen diesen Leitungen, zu je zwei betrachtet, ausreichend ist, damit die Katalysatorpartikel nicht abgebremst werden, wobei die Vielzahl von Leitungen über wenigstens einen Stutzen gespeist sind, der im wesentlichen horizontal in das Innere des Reaktors eintritt.

(b) oder man verwendet, zum Einführen eines Teils der Charge einen Stutzen für den Trichter, der im wesentlichen horizontal in das Innere des Reaktors eindringt und dann im wesentlichen einem Weg folgt, der mit der Achse des Trichters zusammenfällt, und zwar bis in den Boden dieses Trichters, wobei der Stutzen dann in ein Bündel von aufsteigenden Rohren oder Rohrverzweigungen auseinandergeht, die i. wesentl. parallel zu den Wandungen des Trichters sind, wobei diese Rohre von diesen Öffnungen durchbohrt sind, über die das Einführen eines Teils der Charge erfolgt und diese Öffnungen sich in Form von Perforationen oder Schlitzen darbieten.

FIG.1

FIG.1B

FIG.1C

FIG.1A

FIG.1D

0 064 459

9

0 064 459

FIG.2

FIG.6

FIG.2A

FIG.6A

FIG.3

FIG.4

FIG.5

FIG.6B

11